# EUROPEAN PATENT APPLICATION

(11) **EP 4 711 217 A1**
(43) Date of publication of application: **18.03.2026**
(21) Application number: 24200116.2
(22) Date of filing: 12.09.2024
(51) Int. Cl.: B60T 8/1755, B60W 30/02, B62D 6/00

(54) **METHOD FOR STEERING A VEHICLE WITH A STEER-BY-WIRE SYSTEM**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); STRAUB, Kornel, 2013 Pomáz (HU); TOTH, Zoltan, 1046 Budapest (HU); ENZSÖL, Ákos, 1117 Budapest (HU)

(57) **Abstract**

The present invention refers to a method for steering a vehicle with a steer-by-wire system, the method including at least the steps of detecting an actual position of the road wheel (140), comparing the actual position of the road wheel (140) to a target position of the road wheel (140), determining a deviation between the actual position of the road wheel (140) and the target position of the road wheel (140) and if the deviation is above a first threshold, decelerate the vehicle. Further, the present invention refers to system.

## Description

The present invention refers to a method for steering a vehicle with a steer-by-wire system.

According to usual techniques, a driver of a vehicle being equipped with a steer-by wire system may turn the steering wheel in order to induce road wheels to change their direction and thus to initiate a change of the driving direction.

US 2023/227101 A1 discloses a steer-by-wire steering system for a vehicle that can prevent the vehicle from suddenly accelerating in a direction which the driver did not anticipate even when the steering angle of the steering member was changed while the vehicle was parked. When the steered angle deviates from the prescribed relationship to the steering angle, immediately or upon satisfaction of a trigger condition, the control unit drives the steering actuator to bring the steered angle to come closer to the prescribed relationship to the steering angle and sets an upper limit to a speed or an acceleration of the vehicle.

EP 3740416 A1 discloses a method for controlling a steer-by-wire steering system for motor vehicles, comprising a steering flow divider, which acts on the steered wheels, being controlled electronically according to the driver's steering input, and which effects a translational movement of a steering rack for steering the wheels. A feedback actuator transmits feedback effects of the road onto a steering wheel in the form of a steering response, wherein, on the basis of the steering wheel steer angle, a setpoint position of the steering rack is determined in a signal processing unit and is transmitted with a current position of the steering rack or with a measured steering wheel angle as current value to a control unit. On that basis a setpoint torque of the electric motor of the steering adjuster is calculated. If the torque needed to reach the setpoint position of the steering rack exceeds the maximum power of the electric motor, the force feedback actuator increases a counter torque on the steering wheel.

US2015274196 A1 discloses a catch-up prevention method of an active front steering that may include (a) judging whether an output of a power steering system is required in a vehicle to which the active front steering (AFS) is applied, (b) judging whether a steering angle of a steering wheel is increased to a preset predetermined angle or more, (c) judging whether an input speed of a pinion is larger than an output speed of the pinion, and (d) lowering a gear ratio of the active front steering when (a), (b) and (c) are satisfied. The document discloses an effect in which a steering gear ratio for each vehicle speed is actively varied to improve steering convenience and driving stability. A function to assist avoiding a risk by steering a front wheel of the vehicle more rapidly than avoidance steering which the driver intends under a quick steering situation before a collision and a function to stabilize the vehicle posture through a front wheel counter steering control when a behaviour of the vehicle is instable through a cooperative control with an electronic stability control (ESC) is mentioned as well.

In a steer-by-wire system it may happen that the vehicle driver turns the steering wheel so quickly that the road-wheel actuator cannot keep up with that pace and a difference is developing between the demanded and the realised road-wheel position, which is a so called catch-up situation. This difference may cause the vehicle to leave the desired trajectory and potentially causes an accident.

It is an object of the invention to provide a method for a steer-by-wire system which enhances the safety of the driving in an efficient, safe and comfortable way. It is a further object of the invention to at least partially eliminate the above-mentioned disadvantages.

These objectives are resolved by a method according to independent claim 1 and concerning a system by independent claim 9. Preferred embodiments are addressed by the dependent claims respectively.

According to the present invention a method for steering a vehicle with a Steer-by-Wire system, is provided, the vehicle comprising road wheels, a steering wheel, a steering wheel actuator, a road wheel actuator and a brake system, the method including at least the steps of:
- detecting an actual position of the road wheel,
- comparing the actual position of the road wheel to a target position of the road wheel,
- determining a deviation, in particular a deviation value, between the actual position of the road wheel and the target position of the road wheel,
- if the deviation is above a first threshold, decelerate the vehicle, in particular the at least one road wheel.

The present invention is based on the idea to reduce the speed of the vehicle in order to bring the vehicle into safe state in catch-up situations to avoid accidents or at least change the conditions to allow the road-wheel actuator to catch-up with the demand and reduce the difference of the demanded and the realised road-wheel position to an acceptable, safe value.

If the deviation is below the first threshold (value), the vehicle is in a safe condition.

In the context of the present invention the actual/target position of the at least one road wheel can be associated with a current position value or value range, either as an absolute value or as a relative value dependent from each other or the vehicle.

Moreover, also parameters like the deviation or thresholds can be considered as values and/or value ranges in the context of the present invention.

According to one preferred embodiment the deceleration is proportional to the deviation, in particular to the deviation value.

Pursuant to another preferred embodiment, the deceleration is proportional to a gradient over time of the deviation, in particular the deviation value.

According to a preferred embodiment the deceleration is, at least essentially, a linear deceleration with a predetermined deceleration value. Such a predetermined deceleration value might be e.g. 1 m/s.

The type of the deceleration, being proportional to the deviation, proportional to a gradient over time of the deviation or a linear deceleration with a predetermined deceleration value, may be fixed for a system or one type might be chosen depending on the deviation value, speed of the vehicle etc.

If the type of deceleration is not fixed for the system, the deceleration might be calculated depending on the deviation and optionally further driving parameters, road condition parameters, weather condition parameters and/or the like.

According to one preferred embodiment the deceleration is stopped/ended when a predetermined target speed of the vehicle is reached, in particular wherein the target speed is chosen to be lower than 60 km/h in particular the target speed is 30 km/h, in particular the target speed is 10 km/h, in particular the target speed is 0 km/h. If the target speed is 0 km/h, the vehicle comes to a complete stop, e.g. an emergency stop.

According to one preferred embodiment deceleration is stopped, when the deviation has dropped under a second threshold (value), wherein the second threshold (value) is less than or equal to the first threshold (value).

In particular, the first threshold might be an upper limit for a safe condition and the second threshold is within pre-determinable limits for a safe condition, particularly dependent from e.g. road conditions, weather conditions and/or the like.

According to one preferred embodiment the method, at least single steps of the method, is/are performed/executed by at least one of the road wheel actuator, the steering wheel actuator and/or a separate steering controller unit.

According to another preferred embodiment the method, at least single steps of the method, is/are performed/executed by one of a brake system controller, a powertrain system controller and/or a vehicle level control unit.

In particular, controllers of different levels within a vehicle can form a master-slave combination in order to provide a certain redundancy and/or to take further parameters during use of the steering system/the vehicle into account, in particular to assess the driving state of the vehicle more globally.

According to another aspect of the invention a system for performing the method according to the present invention is provided, the system comprising at least one road wheel of a vehicle, a steering wheel, a steering wheel actuator for receiving an user input signal/command from the steering wheel and for transmitting a steering signal/command to a road wheel actuator, the road wheel actuator for steering the at least one road wheel and a brake system for decelerating the at least one road wheel and/or the vehicle, as well as a sensor for detecting the actual road wheel position.

According to one preferred embodiment, the system may further comprises at least one of a brake system controller, a powertrain system controller or a vehicle level control unit for executing the method according to the present invention.

All of the advantages and technical effects being described in the context of method can also be applied, individually or commonly, for the system according to the present invention.

Further details and advantages of the present invention are explained and described in more detail in the context of the embodiment as illustrated by the enclosed figures.

It is schematically shown:
Fig. 1 an embodiment of a steer-by-wire system;
Fig. 2 illustration of a deviation of the road-wheel position; and
Fig. 3 an exemplary embodiment of a method to provide steering by a system according to Fig .1.

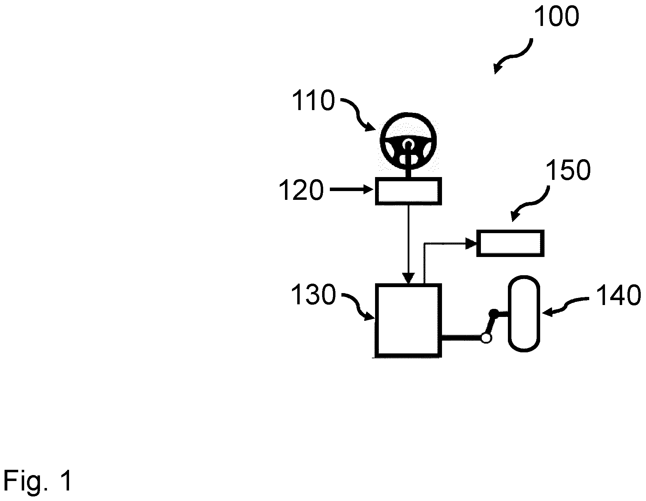

In Fig. 1 a steer by wire system 100 is shown. The system 100 has a steering wheel 110, which can be turned by the driver in the sense of a user input signal/command.

The steering wheel is connected to a steering wheel actuator 120.

The steering wheel actuator 120 is further connected to a road wheel actuator 130 for transmitting a steering signal/command to the road wheel actuator 130.

The road wheel actuator 130 is further connected to the road wheel 140. The road wheel 140 runs on the road and is turned in order to change the driving direction by the road wheel actuator 130 as a response to a driver/user input signal/command, the driver/user input signal/command being given by turning the steering wheel.

The road wheel actuator 130 is further connected to a brake system electronic control unit 150.

The brake system unit 150 is configured to decelerate the vehicle upon a deceleration signal/command.

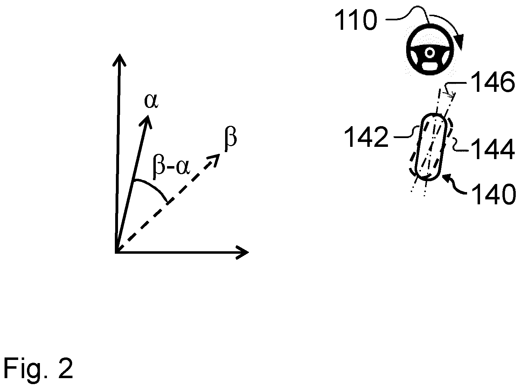

Fig. 2 shows a sketch for illustration of the deviation of the road-wheel position.

The road-wheel 140 is depicted in a top view. Thus, the angle α is an angle in the plane of the road.

The steering wheel 110 is turned by an angle which induces, via the system, 100 the wheel 140 to change the position as well, wherein the road wheel position is depicted from a top view in Fig. 2.

The road wheel 140 is in an actual position marked with reference number 142 and the solid black line. Thus, in the actual position the wheel 140 is turned by an angle α.

However, the driver/user demanded by turning the steering wheel 110 the road wheel 140 to be in the target position 144, which means the road wheel 140 to be turned by an angle β. The target position 144 and the actual position 142 are different from each other by an angle β-α, which is the deviation (value) from the target position according to the illustration in Fig. 2.

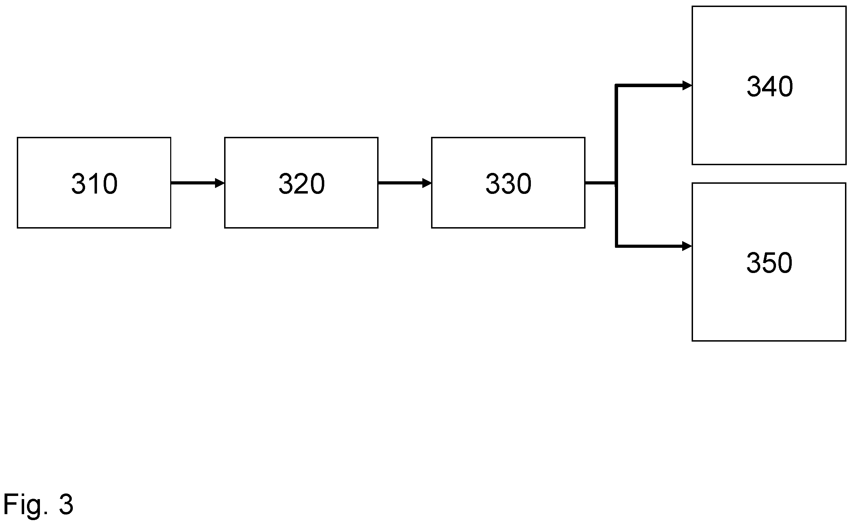

Fig. 3 shows a flow diagram of the method according to one preferred embodiment.

In a first step an actual position of the road wheel 140 is detected 310.

The detected actual position 142 is compared 320 to the target position 144 of the road wheel 140.

A deviation between the actual position 142 of the road wheel 140 and the target position 144 of the road wheel 140 is determined 330.

If the deviation is above a first threshold (value), a command/signal for deceleration of the vehicle 340 is provided to the electronic control system 150 of the braking system. If not, the method restarts 350 with detecting 310 the actual position 142 of the road wheel 140.

In summary, by the present invention a method for steering a vehicle with a steer-by-wire system, can be provided which allows for an efficient, safe and comfortable operation of the (commercial) road vehicle.

In particular, the method reduces the probability of potential accidents by providing a specific deceleration of the vehicle in consideration of the respective driving state of the vehicle.

### REFERENCE SIGNS

- 100: Steer-by-wire system
- 110: Steering wheel
- 120: Steering wheel actuator
- 130: Road wheel actuator
- 140: Road wheel
- 142: Actual position
- 144: Target position
- 146: Deviation
- 150: Brake system electronic control unit
- 310: Detect an actual position of the road wheel
- 320: Compare the actual position to a target position
- 330: Determine a deviation
- 340: If the deviation is above a first threshold, decelerate the vehicle
- 350: If the deviation is not above a first threshold, restart method
- α: Actual (angle) position of road wheel
- β: Target (angle) position of road wheel

## Claims

1. Method for steering a vehicle with a steer-by-wire system,
the vehicle comprising at least one road wheel (140), a steering wheel (110), a steering wheel actuator (120), a road wheel actuator (130) and a brake system (150),
the method including at least the steps of:
- detecting an actual position of the road wheel (140),
- comparing the actual position of the road wheel (140) to a target position of the road wheel (140),
- determining a deviation, in particular a deviation value, between the actual position of the road wheel (140) and the target position of the road wheel (140),
- if the deviation is above a first threshold, decelerate the vehicle, in particular the at least one road wheel (140).

2. Method according to claim 1,
**characterized in that**
the deceleration is proportional to the deviation, in particular to the deviation value.

3. Method according to claim 1,
**characterized in that**
the deceleration is proportional to a gradient over time of the deviation, in particular the deviation value.

4. Method according to claim 1,
**characterized in that**
the deceleration is at least essentially a linear deceleration, preferably with a predetermined deceleration value.

5. Method according to one of the preceding claims,
**characterized in that**
the deceleration is stopped when a predetermined target speed of the vehicle is reached, in particular wherein the target speed is chosen to be lower than 60 km/h, in particular the target speed is 30 km/h, in particular the target speed is 10 km/h, in particular the target speed is 0 km/h.

6. Method according to one of the claims 1 to 4,
**characterized in that**
the deceleration is stopped, when the deviation has dropped under a second threshold, wherein the second threshold is less than or equal to the first threshold.

7. Method according to one of the preceding claims,
**characterized in that**
wherein the method, at least single steps of the method, is/are performed by at least one of the road wheel actuator (130), the steering wheel actuator (120) and/or by a separate steering controller unit.

8. Method according to one of the claims 1 to 6,
**characterized in that**
wherein the method, at least single steps of the method, is/are performed by at least one of a brake system controller, a powertrain system controller and/or a vehicle level control unit.

9. System (100) for performing the method according one of the preceding claims, the system (100) comprising at least one road wheel (140) of a vehicle, a steering wheel (110), a steering wheel actuator (120) for receiving an input signal/command from the steering wheel and for transmitting a steering signal/command to a road wheel actuator (130), the road wheel actuator (130) for steering the at least one road wheel (140) and a brake system (150) for decelerating the at least one road wheel (140) and/or the vehicle, as well as a sensor for detecting the actual road wheel position.

10. System according to claim 9,
**characterized in that**
the system further comprising at least one of a brake system controller, a powertrain system controller or a vehicle level control unit for executing the method according to one of the preceding claims.
